(19) Europäisches Patentamt
European Patent Office
Office européen des brevets

(11) EP 4 552 935 A1

(12) EUROPEAN PATENT APPLICATION

(43) Date of publication:
14.05.2025 Bulletin 2025/20

(21) Application number: 24205414.6

(22) Date of filing: 08.10.2024

(51) International Patent Classification (IPC):
B60T 13/74 (2006.01)

(52) Cooperative Patent Classification (CPC):
B60T 13/741; B60T 8/1703

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 08.11.2023 US 202318504726

(71) Applicant: Goodrich Corporation
Charlotte, NC 28217-4578 (US)

(72) Inventors:
• GEORGIN, Marc
Dayton, 45419 (US)
• BAINS, Resham
Tipp City, OH, 45371 (US)

(74) Representative: Dehns
10 Old Bailey
London EC4M 7NG (GB)

(54) FORCE CONTROL FOR AN ELECTROMECHANICAL BRAKE ACTUATOR

(57) A brake system is disclosed herein. The brake system includes an electromechanical brake actuator (104), a pressure plate (110), an end plate (111), a ball screw (106) positioned between the electromechanical brake actuator (104) and the pressure plate (110), and a plurality of rotating discs positioned between the pressure plate (110) and the end plate (111). The electromechanical brake actuator (104) is configured to extend the ball screw (106) to a ball screw position to apply a requested force to the pressure plate (110) towards the end plate (111) thereby forcing the plurality of rotating discs together in an axial direction in order to reduce a rotational speed of the plurality of rotating discs. The ball screw (106) is extended by the electromechanical brake actuator (104) to the ball screw position based on a worn state of the plurality of rotating discs and a stiffness curve for the electromechanical brake actuator (104) that represents force versus ball screw position for the worn state.

FIG.1B

EP 4 552 935 A1

# EP 4 552 935 A1

**Description**

**FIELD**

The present disclosure relates to aircraft braking systems, and more specifically, to force control for an electromechanical brake actuator.

**BACKGROUND**

Typically, an aircraft may comprise a plurality of electromechanical brake (E-brake) assemblies that are configured to apply force to a brake stack on an aircraft wheel. Typically, a load cell signal is utilized for brake force measurement and feedback for accurate force control. A typical E-brake contains four electromechanical brake actuators (EBAs) located 90 degrees apart from each other around the brake and there is one load cell sensor per EBA. Accurate force control of the EBAs provides for a predictable and smooth operation of the braking system during taxi and landing.

**SUMMARY**

A brake system is disclosed herein. The brake system includes an electromechanical brake actuator, a pressure plate, an end plate, a ball screw positioned between the electromechanical brake actuator and the pressure plate, and a plurality of rotating discs positioned between the pressure plate and the end plate. The electromechanical brake actuator is configured to extend the ball screw to a ball screw position to apply a requested force to the pressure plate towards the end plate thereby forcing the plurality of rotating discs together in an axial direction in order to reduce a rotational speed of the plurality of rotating discs. The ball screw is extended by the electromechanical brake actuator to the ball screw position based on a worn state of the plurality of rotating discs and a stiffness curve for the electromechanical brake actuator that represents force versus ball screw position for the worn state.

In various embodiments, the brake system further includes a position sensor. In various embodiments, the ball screw position is determined using the position sensor. In various embodiments, the position sensor is at least one of a resolver, tachometer, or Hall sensor.

In various embodiments, the brake system further includes a load cell sensor. In various embodiments, responsive to the load cell sensor being faulty, the electromechanical brake actuator is configured to extend the ball screw to the ball screw position to apply the requested force to the pressure plate towards the end plate. In various embodiments, the ball screw is extended by the electromechanical brake actuator to the ball screw position based on the worn state of the plurality of rotating discs and the stiffness curve for the electromechanical brake actuator that represents force versus ball screw position for the worn state.

In various embodiments, the stiffness curve for the electromechanical brake actuator is a plurality of stiffness curves for the electromechanical brake actuator for a plurality of worn states. In various embodiments, the ball screw position for the requested force is determined using a selected one of the plurality of stiffness curves for the electromechanical brake actuator based on the worn state of the plurality of rotating discs.

In various embodiments, the stiffness curve for the electromechanical brake actuator is a plurality of stiffness curves for the electromechanical brake actuator for a plurality of worn states. In various embodiments, the ball screw position for the requested force is determined using two stiffness curves for the electromechanical brake actuator of the plurality of stiffness curves for the electromechanical brake actuator and interpolating the ball screw position from the two stiffness curves for the electromechanical brake actuator based on the worn state of the plurality of rotating discs.

In various embodiments, the plurality of stiffness curves for the electromechanical brake actuator for the plurality of worn states includes a stiffness curve for the electromechanical brake actuator for a new state that is identified by an initial determined distance between a fully retracted ball screw position and initial contact of the pressure plate to the plurality of rotating discs and includes a stiffness curve for the electromechanical brake actuator for a fully worn state is determined based on the initial determined distance and a thickness of the plurality of rotating discs.

In various embodiments, the plurality of stiffness curves for the electromechanical brake actuator for the plurality of worn states includes at least a 25% worn state, a 50% worn state, and a 75% worn state interpolated based on the new state and the fully worn state.

Also disclosed herein is a brake system. The brake system includes an electromechanical brake actuator and a ball screw. The ball screw is configured to be extended, by the electromechanical brake actuator, in order to apply a requested force to a brake pressure plate in order to force a plurality of rotating discs and stators together in an axial direction in order to reduce a rotational speed of the plurality of rotating discs. The ball screw is configured to be extended, by the electromechanical brake actuator, based on a worn state of the plurality of rotating discs and a stiffness curve for the electromechanical brake actuator that represents force versus ball screw position for the worn state.

In various embodiments, the brake system further includes a position sensor. In various embodiments, the ball screw position is determined using the position sensor. In various embodiments, the position sensor is at least one of a resolver, tachometer, or Hall sensor.

In various embodiments, the brake system further includes a load cell sensor. In various embodiments, responsive to the load cell sensor being faulty, the electromechanical brake actuator is configured to extend the ball screw to apply the requested force to the pressure plate.

In various embodiments, the stiffness curve for the electromechanical brake actuator is a plurality of stiffness curves for the electromechanical brake actuator for a plurality of worn states. In various embodiments, the ball screw position for the requested force is determined using a selected one of the plurality of stiffness curves for the electromechanical brake actuator based on the worn state of the plurality of rotating discs.

In various embodiments, the stiffness curve for the electromechanical brake actuator is a plurality of stiffness curves for the electromechanical brake actuator for a plurality of worn states. In various embodiments, the ball screw position for the requested force is determined using two stiffness curves for the electromechanical brake actuator of the plurality of stiffness curves for the electromechanical brake actuator and interpolating the ball screw position from the two stiffness curves for the electromechanical brake actuator based on the worn state of the plurality of rotating discs.

In various embodiments, the plurality of stiffness curves for the electromechanical brake actuator for the plurality of worn states includes a stiffness curve for the electromechanical brake actuator for a new state that is identified by an initial determined distance between a fully retracted ball screw position and initial contact of the pressure plate to the plurality of rotating discs and includes a stiffness curve for the electromechanical brake actuator for a fully worn state is determined based on the initial determined distance and a thickness of the plurality of rotating discs.

In various embodiments, the plurality of stiffness curves for the electromechanical brake actuator for the plurality of worn states includes at least a 25% worn state, a 50% worn state, and a 75% worn state interpolated based on the new state and the fully worn state.

Also disclosed herein is a method of controlling an electromechanical brake actuator of a brake assembly. The method includes, responsive to receiving a request to apply a requested force to the brake assembly, identifying, by an electromechanical brake actuator controller, a worn state of a plurality of rotating discs of the brake assembly; identifying, by the electromechanical brake actuator controller, a ball screw position based on the worn state and a stiffness curve for the electromechanical brake actuator that represents force versus ball screw position for the worn state; and, responsive to identifying the ball screw position for the requested force from the stiffness curve for the electromechanical brake actuator, commanding, by the electromechanical brake actuator controller, the electromechanical brake actuator to extend a ball screw to the ball screw position to apply the requested force to a pressure plate towards an end plate thereby forcing the plurality of rotating discs together in an axial direction in order to reduce a rotational speed of the plurality of rotating discs.

In various embodiments, the ball screw position is determined using a position sensor. In various embodiments, the position sensor is at least one of a resolver, tachometer, or Hall sensor.

In various embodiments, responsive to a load cell sensor being faulty, the electromechanical brake actuator controller is configured to command an extension of the ball screw to the ball screw position to apply the requested force to the pressure plate towards the end plate. In various embodiments, the ball screw is extended by the electromechanical brake actuator to the ball screw position based on the worn state of the plurality of rotating discs and the stiffness curve for the electromechanical brake actuator that represents force versus ball screw position for the worn state

In various embodiments, the stiffness curve for the electromechanical brake actuator is a plurality of stiffness curves for the electromechanical brake actuator for a plurality of worn states. In various embodiments, the ball screw position for the requested force is determined using a selected one of the plurality of stiffness curves for the electromechanical brake actuator based on the worn state of the plurality of rotating discs.

In various embodiments, the stiffness curve for the electromechanical brake actuator is a plurality of stiffness curves for the electromechanical brake actuator for a plurality of worn states. In various embodiments, the ball screw position for the requested force is determined using two stiffness curves for the electromechanical brake actuator of the plurality of stiffness curves for the electromechanical brake actuator and interpolating the ball screw position from the two stiffness curves for the electromechanical brake actuator based on the worn state of the plurality of rotating discs.

In various embodiments, the plurality of stiffness curves for the electromechanical brake actuator for the plurality of worn states includes a stiffness curve for the electromechanical brake actuator for new state that is identified by an initial determined distance between a fully retracted ball screw position and initial contact of the pressure plate to the plurality of rotating discs and includes a stiffness curve for the electromechanical brake actuator for a fully worn state is determined based on the initial determined distance and a thickness of the plurality of rotating discs. In various embodiments, the plurality of stiffness curves for the electromechanical brake actuator for the plurality of worn states includes at least a 25% worn state, a 50% worn state, and a 75% worn state interpolated based on the new state and the fully worn state.

## BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

FIG. 1A illustrates an aircraft having multiple landing gear and brakes, in accordance with various embodiments.

FIG. 1B illustrates an aircraft brake in accordance with various embodiments.

FIG. 2 illustrates a block diagram of an electromechanical brake actuator control system in accordance with various embodiments.

FIG. 3 illustrates a method for force control for an electromechanical brake actuator in accordance with various embodiments.

FIG. 4 illustrates a method for force control for an electromechanical brake actuator in accordance with various embodiments.

## DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step.

As used herein, "electronic communication" means communication of electronic signals with physical coupling (e.g., "electrical communication" or "electrically coupled") or without physical coupling and via an electromagnetic field (e.g., "inductive communication" or "inductively coupled" or "inductive coupling").

While described in the context of aircraft applications, and more specifically, in the context of brake control, the various embodiments of the present disclosure may be applied to any suitable application.

As stated previously, a typical E-brake contains four electromechanical brake actuator (EBAs) located 90 degrees apart from each other around the brake and there is one load cell sensor per EBA. Typically, load cell signals are in the millivolt (mV) range and are susceptible to noise due to long wire length to the electromechanical brake actuator controller (EBAC) in the aircraft. In the event that a load cell signal becomes unreliable due to, for example, noise, or unavailable due to, for example, a malfunction of the load cell sensor itself or a wiring problem such as a broken wire, the EBAC may no longer be able to control the EBA's force. One option to handle this situation is to disable the EBA with the faulty load cell sensor and apply more force on the other three EBA's on the brake to apply an overall equivalent net force but only so much force may be applied as the other three EBA's should not be driven to more than 100% of their capability. Another option is to not disable the EBA in question but command the EBA in an open loop fashion in order to produce some amount of force. One issue with applying force in an open loop manner is that open loop control is not precise and does not provide a predictable force. Often the EBA ball screw is driven to a certain position in anticipation that the position is representative of the required force. However, this force varies greatly over time, the amount of force applied may depend on the EBA's location around the brake as well as a state of the brake, i.e. new, worn, or somewhere in between. Yet another option is not to include load cell sensor in E-brake assemblies. Typical no load cell sensor systems rely on motor electrical current measurements to estimate the torque and force applied. However, in such E-brake systems, electrical current measures have to be supplemented with temperature measurements of the motor windings in order to identify an accurate torque application because the electrical resistance of copper varies significantly with temperature and therefore impacts the motor current/motor torque relationship.

Disclosed herein is an electromechanical brake (E-brake) system that utilizes various brake stiffness curves that represent force versus ball screw position for each EBA. Stated another way, there is a different set of stiffness curves for each EBA of a same brake stack that has one worn state. Each of the various stiffness curves for each EBA is associated with a worn state, i.e. new, 25% worn, 50% worn, 75% worn, and fully worn, among others. In various embodiments, in an e-brake system, for each EBA, the EBAC routinely performs a wear measurement by retracting a ball screw associated with the EBA fully and then advancing the ball screw until the pressure plate initially contacts the brake assembly, i.e. the first rotor or stator, which may be identified based on an electrical current increase utilized by the EBA, as an example. The EBAC measures a distance between the fully retracted position and initial contact position and determined a worn state based on the determined distance. It is noted that, when new brakes are installed, the new state is identified by the initial determined distance between the fully retracted ball screw position and initial contact of the pressure plate to the plurality of rotating discs position and the fully worn state is determined based on the initial determined distance and an initial thickness of the plurality of rotating discs. In various embodiment, the worn states are interpolated based on these two distances. In various embodiments where an event occurs where the EBAC detects a faulty load cell for an EBA, the EBAC applies position control to the EBA using a position sensor. To identify the needed ball screw extension that will correspond to the requested force, the EBAC utilizes a current worn state of the brake associated with the EBA, which is stored in a memory of the EBAC, and one or more of the various stiffness curves for the EBA associated with the current worn state, which are stored in the memory of the EBAC. Responsive to the worn state being substantially equivalent to one of the various stiffness curves for the EBA, the EBAC is configured to utilize the identified position of the ball screw associated with the requested force from the stiffness curve to send a command to the EBA to extend the ball screw to the identified ball screw position to apply the requested force. The terms "substantially," "about," or "approximately" as used herein represent an amount close to the stated amount that still performs a desired function or achieves a desired result. For example, the term "substantially," "about," or "approximately" may refer to an amount that is within 5 percent, within 3 percent, within 2 percent, or within 1 percent of a stated amount or value. However, responsive to the worn states not being substantially equivalent to one of the various stiffness curves for the EBA, for example 35%, the EBAC interpolates linearly between the position at 25% and the position at 50% to identify the appropriate ball screw position for the requested force at the 35% worn state. For example, if the 25% worn brake for 6000 pounds of force (lbf) (2722 kilograms of force) corresponds to a position of 0.06 inches (0.1524 centimeter) and the 50% worn brake for 6000 lbf (2722 kilograms of force) corresponds to a position of 0.07 inches (0.1778 centimeter), then the EBAC may interpolate the position for the 6000 lbf at 35% worn brake as:

$$0.06 \; inches + \frac{(0.07 \; inches - 0.06 \; inches)}{(0.5 - 0.25)} \times (0.35 - 0.25) = 0.064 \; inches$$

Accordingly, the EBAC is configured to utilize the interpolated position of the ball screw associated with the requested force from the stiffness curves for the EBA to send a command to the EBA to extend the ball screw to the interpolated ball screw position to apply the requested force. In various embodiments where the EBA does not include load cell sensors, the EBAC is configured to utilize the current worn state of the EBA to extend the ball screw and apply a requested force. In various embodiments, utilizing the identified worn state, the EBAC identifies a position to extend the ball screw for the EBA using the various stiffness curves associated with the specific EBA. In that regard, in various embodiments, each EBA has a different set of stiffness curves for the worn states of the associated brake stack. Accordingly, the EBAC utilizes the set of stiffness curves for the specific EBA to determine a position for the associated ball screw associated with the requested force to send a command to the respective EBAs to extend the ball screw to the identified/interpolated ball screw position to apply the requested force. The selected stiffness curves for the EBA provide accurate stiffness and therefore force versus position relationship for the brake at the time a failure of a load cell sensor is determined. Accordingly, operating an EBA in an event where the EBAC detects a faulty load cell for an EBA provides a level of performance until the EBA receives maintenance.

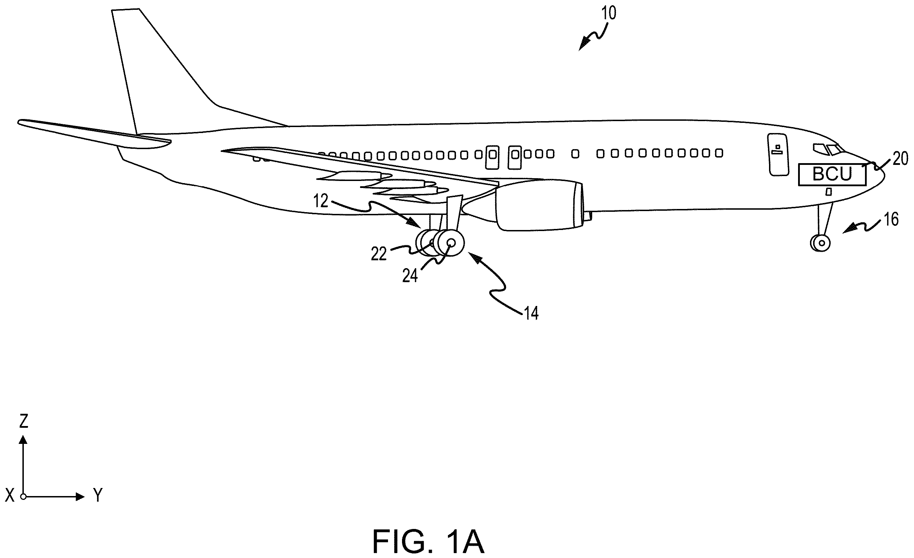

Referring to Figure 1A, in accordance with various embodiments, an aircraft 10 is illustrated. The aircraft 10 includes a landing gear, which may include a left main landing gear 12, a right main landing gear 14 and a nose landing gear 16. The landing gear support the aircraft 10 when it is not flying, allowing the aircraft 10 to taxi, take off, and land without damage. While the disclosure refers to the three landing gear configurations just referred, the disclosure nevertheless contemplates any number of landing gear configurations.

Aircraft 10 may further include a brake control unit (BCU) 20 for controlling a left main brake mechanism 22 of left main landing gear 12 and a right main brake mechanism 24 of right main landing gear 14. BCU 20 controls the application of brake mechanisms 22, 24 in response to input from aircraft 10 or an authorized user. BCU 20 further controls a parking brake functionality of brake mechanisms 22, 24 to secure aircraft 10 in place. A plurality of wires that independently control the braking and parking brake functionalities run through aircraft 10 from BCU 20 to left main brake mechanism 22 and right main brake mechanism 24.

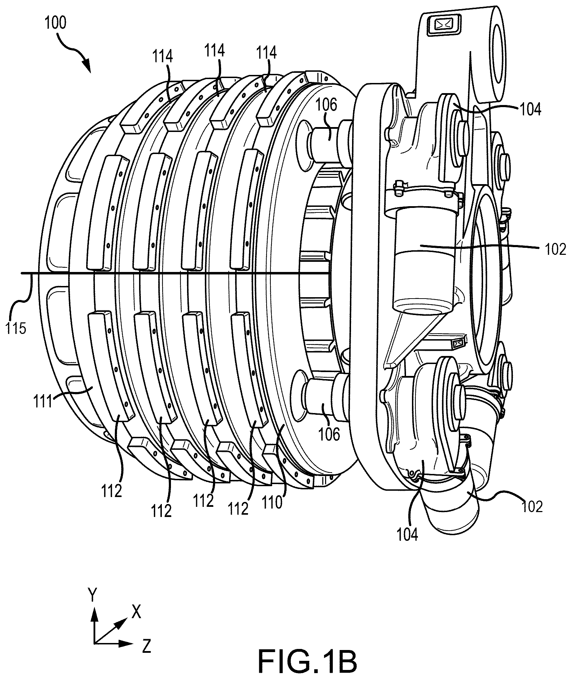

Referring to FIG. 1B, an aircraft brake arrangement 100 in accordance with various embodiments is illustrated. Aircraft brake arrangement 100 may include a plurality of actuator motors 102, a plurality of electromechanical brake actuators (EBAs) 104, a plurality of ball screws 106, an end plate 111 and a pressure plate 110, and a plurality of rotating discs 112 and stators 114 positioned in an alternating fashion between end plate 111 and pressure plate 110. Rotating discs 112 may rotate about an axis 115 and the stators 114 may have no angular movement relative to axis 115. Wheels may be coupled to rotating discs 112 such that a linear speed of the aircraft is proportional to the angular speed of rotating discs 112. As force is applied to pressure plate 110 towards end plate 111 along the axis 115, rotating discs 112 and stators 114 are forced together in an axial direction. This causes the rotational speed of rotating discs 112 to become reduced (i.e., causes braking effect) due to friction between rotating discs 112, stators 114, end plate 111 and pressure plate 110. In response to sufficient force being exerted on rotating discs 112 via pressure plate 110, the rotating discs 112 will stop rotating.

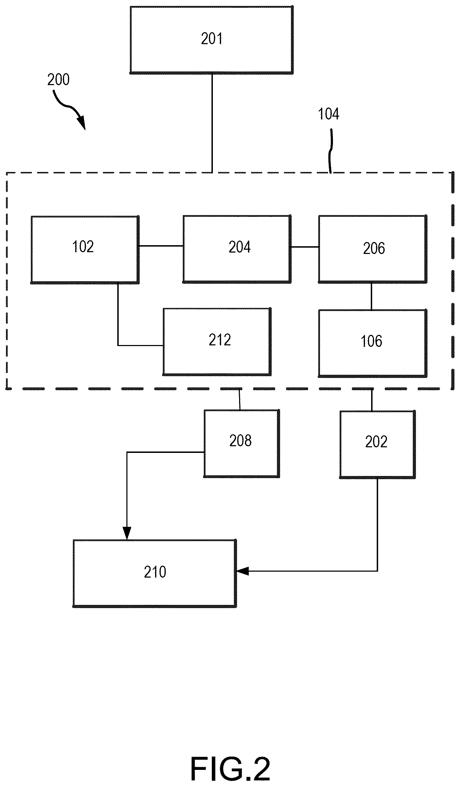

In order to exert this force onto pressure plate 110, actuator motor 102 may cause EBA 104 to actuate. Although referred to herein as EBA 104, it is contemplated that, in various embodiments, EBA 104 may be an electrohydraulic actuator. In various embodiments, actuator motor 102 may be a brushless motor, such as a permanent magnet synchronous motor (PMSM), a permanent-magnet motor (PMM) or the like. In various embodiments, EBA 104 may be coupled to or otherwise operate a motor shaft and a pressure generating device, such as, for example, a ball screw, a ram, and/or the like. In response to actuation or a brake command, EBA 104 causes the motor shaft to rotate. Rotation of the motor shaft 204 may cause rotation of a ball screw 206 (e.g., see FIG. 2), and rotational motion of the ball screw 206 may be transformed into linear motion of a ball screws 106. Linear translation of ball screws 106 towards pressure plate 110 applies force on pressure plate 110 towards end plate 111.

EBA 104 is actuated in response to electrical current being applied to actuator motor 102. The amount of force applied by EBA 104 is related to the amount of electrical current applied to actuator motor 102. With further reference to FIG. 2, in various embodiments, an electromechanical brake actuator control system 200 may include an electromechanical brake actuator controller (EBAC) 201 in communication with each EBA 104. In various embodiments, the electromechanical brake actuator control system 200 may include an electrical current sensor 212 to detect an amount of electrical current provided to actuator motor 102. Electrical current sensor 212 may be in communication with actuator motor 102 and/or with various other components of an EBA 104, an electromechanical brake actuator control system 200, and/or an aircraft 10. In various embodiments, electrical current sensor 212 may be disposed on or adjacent to actuator motor 102. However, in various embodiments, the electrical current sensor 212 may be disposed in any location suitable for detection of electrical current supplied to the actuator motor 102, such as, for example, in the EBAC 201.

Application of electrical current to actuator motor 102 causes rotation of motor shaft 204. In various embodiments, electromechanical brake actuator control system 200 may include a position sensor 208. Position sensor 208 may be configured so as to measure the rotational speed and position of motor shaft 204. In various embodiments, position sensor 208 may be disposed in or adjacent to EBA 104, or on or adjacent to actuator motor 102. However, position sensor 208 may be disposed in any location suitable for detection of the rotational speed and position of motor shaft 204. In various embodiments, position sensor 208 may include a resolver, tachometer, or Hall sensor, among others.

In various embodiments, electromechanical brake actuator control system 200 may include a load cell 202. Load cell 202 may be configured so as to measure the amount of force being applied between ball screws 106 and pressure plate 110. In various embodiments, load cell 202 may be disposed in or adjacent to EBA 104, or on or adjacent to ball screws 106. However, load cell 202 may be disposed in any location suitable for detection of the force being applied between ball screws 106 and pressure plate 110. A controller may receive the detected force and rotational speed and calculate an adjusted force and an adjusted rotational speed based on those detected values. In various embodiments, electromechanical brake actuator control system 200 may include a fault tolerant module 210.

In various embodiments, a system for brake actuator operation with load cell fault tolerant technology includes four load cells 202, four electrical current sensors 212, four position sensors 208, and at least one controller. The system for multiple brake actuator operation via one load cell may include a fault tolerant module 210. In various embodiments, fault tolerant module 210 may be a controller and/or processor. In various embodiments, fault tolerant module 210 may be implemented in a single controller and/or processor. In various embodiments, fault tolerant module 210 may be implemented in multiple controllers and/or processors. In various embodiments, fault tolerant module 210 may be implemented in an electromechanical actuator controller and/or a brake control unit.

With reference to FIGS. 1B and 2, in various embodiments, in response to an event occurring where the EBAC 201 detects a faulty load cell 202 for an EBA 104, the EBAC 201 applies position control to the EBA 104 using a position sensor 208. In various embodiment, to identify the required extension for ball screw 106 that will correspond to a requested force, the EBAC 201 utilizes a current worn state of the brake associated with the EBA, which is stored in a memory of the EBAC 201, and one or more of the various stiffness curves for the EBA 104 associated with the current worn state, which are stored in the memory of the EBAC 201. Responsive to the current worn state being substantially equivalent to one of the various stiffness curves, the EBAC 201 is configured to utilize the identified position of the ball screw associated with the requested force from the stiffness curve for the EBA 104 to send a command to the EBA 104 to extend the ball screw 106 to the identified ball screw position to apply the requested force. The terms "substantially," "about," or "approximately" as used herein represent an amount close to the stated amount that still performs a desired function or achieves a desired result. For example, the term "substantially," "about," or "approximately" may refer to an amount that is within 5 percent, within 3 percent, within 2 percent, or within 1 percent of a stated amount or value. However, responsive to the worn states not being substantially equivalent to one of the various stiffness curves for the EBA 104, for example 35%, the EBAC 201 interpolates linearly between the position at 25% and the position at 50% to identify the appropriate ball screw position for the requested force at the 35% worn state. For example, if the 25% worn brake for 6000 pounds of force (lbf) corresponds to a position of 0.06 inches (0.1524 centimeter) and the 50% worn brake for 6000 lbf corresponds to a position of 0.07 inches (0.1778 centimeter), then the EBAC 201 may interpolate the position for the 6000 lbf at 35% worn brake as:

$$0.06\ inches + \frac{(0.07\ inches - 0.06\ inches)}{(0.5 - 0.25)} \times (0.35 - 0.25) = 0.064\ inches$$

Accordingly, the EBAC 201 is configured to utilize the interpolated position of the ball screw associated with the requested force from the stiffness curves for the EBA 104 to send a command to the EBA 104 to extend the ball screw 106 to the interpolated ball screw position to apply the requested force. In various embodiments where the EBA 104 does not include load cell sensors 202, the EBAC 201 is configured to utilize the various stiffness curves for the EBA 104 to determine positions for the respective ball screws associated with the requested force from the stiffness curves to send a command to the respective EBAs 104 to extend the ball screw 106 to the identified/interpolated ball screw position to apply the requested force. The selected stiffness curves for the EBA 104 provide accurate stiffness and therefore force versus position relationship for the brake at the time a failure of a load cell sensor 202 is determined. Accordingly, operating an EBA 104 in an event where the EBAC 201 detects a faulty load cell 202 for an EBA 104 provides a required performance until the EBA 104 receives maintenance. Additionally, in various embodiments, brake control may be used by EBAC 201 to operate the EBA in braking systems that do not include load cells.

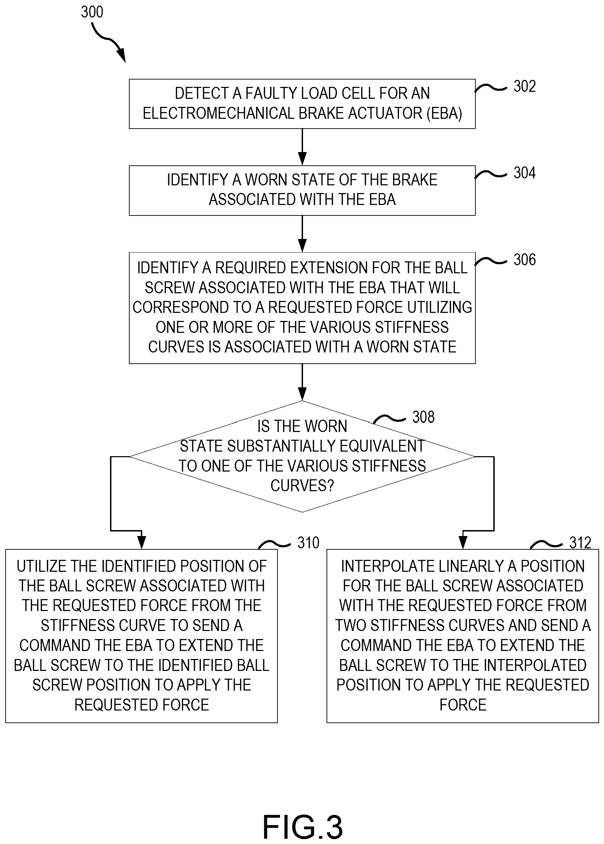

Referring now to FIG. 3, in accordance with various embodiments, a method 300 for force control for an electromechanical brake actuator is illustrated. The method 300 may be performed by an electromechanical brake actuator controller (EBAC) 201 described above with respect to FIG. 2. At block 302, the EBAC detects a faulty load cell for an electromechanical brake actuator (EBA). At block 304, the EBAC identifies a worn state of the brake associated with the EBA, which is identified in a memory of the EBAC. At block 306, responsive to identifying the worn state of the brake associated with the EBA, the EBAC identifies a required extension for the ball screw associated with the EBA that will correspond to a requested force utilizing one or more of the various stiffness curves for the EBA associated with a current worn state, which are stored in the memory of the EBAC. At block 308, the EBAC determines whether the worn state is substantially equivalent to one of the various stiffness curves for the EBA. If at block 308, the worn state is substantially equivalent to one of the various stiffness curves for the EBA, at block 310, the EBAC is configured to identify a position of the ball screw associated with the requested force from the stiffness curve for the EBA to send a command to the EBA to extend the ball screw to the identified ball screw position to apply the requested force. If at block 308, the worn state fails to be substantially equivalent to one of the various stiffness curves for the EBA, at block 312, the EBAC interpolates linearly a position for the ball screw associated with the requested force from two stiffness curves for the EBA and sends a command to the EBA to extend the ball screw to the interpolated position to apply the requested force.

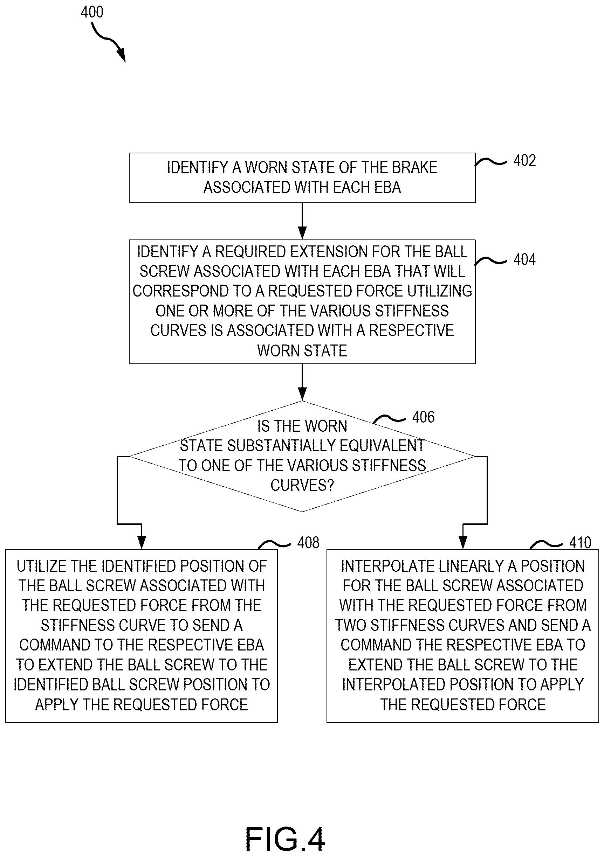

Referring now to FIG. 4, in accordance with various embodiments, a method 400 for force control for an electromechanical brake actuator is illustrated. The method 400 may be performed by an electromechanical brake actuator controller (EBAC) 201 described above with respect to FIG. 2. At block 402, the EBAC identifies a worn state of the brake associated with each EBA, which is identified in a memory of the EBAC. At block 404, responsive to identifying the worn state of the brake associated with each of the EBAs, the EBAC identifies a required extension for the ball screw associated with each EBA that will correspond to a requested force utilizing one or more of the various stiffness curves for the EBA is associated with a respective worn state, which are stored in the memory of the EBAC. At block 406, the EBAC determines whether each worn state is substantially equivalent to one of the various stiffness curves for the EBA. If at block 406, a worn state is substantially equivalent to one of the various stiffness curves for the EBA, at block 408, the EBAC is configured to utilize the identified position of the ball screw associated with the requested force from the stiffness curve for the EBA to send a command to the respective EBA to extend the respective ball screw to the identified ball screw position to apply the requested force. If at block 406, a worn state fails to be substantially equivalent to one of the various stiffness curves for the EBA, at block 410, the EBAC interpolates linearly a position for the ball screw associated with the requested force from two stiffness curves for the EBA and sends a command to the respective EBA to extend the respective ball screw to the interpolated position to apply the requested force.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

**Claims**

1. A brake system comprising:

    an electromechanical brake actuator (104);
    a pressure plate (110);
    an end plate (111);
    a ball screw (106) positioned between the electromechanical brake actuator (104) and the pressure plate (110); and
    a plurality of rotating discs positioned between the pressure plate (110) and the end plate (111);
    wherein the electromechanical brake actuator (104) is configured to extend the ball screw (106) to a ball screw position to apply a requested force to the pressure plate (110) towards the end plate (111) thereby forcing the plurality of rotating discs together in an axial direction in order to reduce a rotational speed of the plurality of rotating discs, and
    wherein the ball screw (106) is extended by the electromechanical brake actuator (104) to the ball screw position based on a worn state of the plurality of rotating discs and a stiffness curve for the electromechanical brake actuator (104) that represents force versus ball screw position for the worn state.

2. The brake system of claim 1, wherein the brake system further comprises:

    a position sensor,
    wherein the ball screw position is determined using the position sensor and wherein the position sensor is at least one of a resolver, tachometer, or Hall sensor.

3. The brake system of claim 1, wherein the brake system further comprises:

    a load cell sensor,
    wherein, responsive to the load cell sensor being faulty, the electromechanical brake actuator (104) is configured to extend the ball screw (106) to the ball screw position to apply the requested force to the pressure plate (110) towards the end plate (111) and wherein the ball screw (106) is extended by the electromechanical brake actuator (104) to the ball screw position based on the worn state of the plurality of rotating discs and the stiffness curve for the electromechanical brake actuator (104) that represents force versus ball screw position for the worn state.

4. The brake system of claim 1, wherein the stiffness curve for the electromechanical brake actuator (104) is a plurality of stiffness curves for the electromechanical brake actuator (104) for a plurality of worn states and wherein the ball screw position for the requested force is determined using a selected one of the plurality of stiffness curves for the electromechanical brake actuator (104) based on the worn state of the plurality of rotating discs.

5. The brake system of claim 1, wherein the stiffness curve for the electromechanical brake actuator (104) is a plurality of stiffness curves for the electromechanical brake actuator (104) for a plurality of worn states and wherein the ball screw position for the requested force is determined using two stiffness curves for the electromechanical brake actuator (104) of the plurality of stiffness curves for the electromechanical brake actuator (104) and interpolating the ball screw position from the two stiffness curves for the electromechanical brake actuator (104) based on the worn state of the plurality of rotating discs.

6. The brake system of claim 5, wherein the plurality of stiffness curves for the electromechanical brake actuator (104) for the plurality of worn states includes a stiffness curve for the electromechanical brake actuator (104) for a new state that is identified by an initial determined distance between a fully retracted ball screw position and initial contact of the pressure plate (110) to the plurality of rotating discs and includes a stiffness curve for the electromechanical brake actuator (104) for a fully worn state is determined based on the initial determined distance and a thickness of the plurality of rotating discs.

7. The brake system of claim 6, wherein the plurality of stiffness curves for the electromechanical brake actuator (104) for the plurality of worn states includes at least a 25% worn state, a 50% worn state, and a 75% worn state interpolated based on the new state and the fully worn state.

8. A brake system comprising:

   an electromechanical brake actuator (104); and
   a ball screw (106),
   wherein the ball screw (106) is configured to be extended, by the electromechanical brake actuator (104), in order to apply a requested force to a brake pressure plate (110) in order to force a plurality of rotating discs and stators together in an axial direction in order to reduce a rotational speed of the plurality of rotating discs, and
   wherein the ball screw (106) is configured to be extended, by the electromechanical brake actuator (104), based on a worn state of the plurality of rotating discs and a stiffness curve for the electromechanical brake actuator (104) that represents force versus ball screw position for the worn state.

9. The brake system of claim 8, wherein the brake system further comprises:

   a position sensor,
   wherein the ball screw position is determined using the position sensor and wherein the position sensor is at least one of a resolver, tachometer, or Hall sensor; and/or wherein the brake system further comprises:

   a load cell sensor,
   wherein, responsive to the load cell sensor being faulty, the electromechanical brake actuator (104) is configured to extend the ball screw (106) to apply the requested force to a pressure plate (110).

10. The brake system of claim 8 or 9, wherein the stiffness curve for the electromechanical brake actuator (104) is a plurality of stiffness curves for the electromechanical brake actuator (104) for a plurality of worn states and wherein the ball screw position for the requested force is determined using a selected one of the plurality of stiffness curves for the electromechanical brake actuator (104) based on the worn state of the plurality of rotating discs.

11. The brake system of claim 8 or 9, wherein the stiffness curve for the electromechanical brake actuator (104) is a plurality of stiffness curves for the electromechanical brake actuator (104) for a plurality of worn states and wherein the ball screw position for the requested force is determined using two stiffness curves for the electromechanical brake actuator (104) of the plurality of stiffness curves for the electromechanical brake actuator (104) and interpolating the ball screw position from the two stiffness curves for the electromechanical brake actuator (104) based on the worn state of the plurality of rotating discs, and optionally wherein the plurality of stiffness curves for the electromechanical brake actuator (104) for the plurality of worn states includes a stiffness curve for the electromechanical brake actuator (104) for a new state that is identified by an initial determined distance between a fully retracted ball screw position and initial contact of a pressure plate (110) to the plurality of rotating discs and includes a stiffness curve for the electromechanical brake actuator (104) for a fully worn state is determined based on the initial determined distance and a thickness of the plurality of rotating discs, and optionally wherein the plurality of stiffness curves for the electromechanical brake actuator (104) for the plurality of worn states includes at least a 25% worn state, a 50% worn state, and a 75% worn state interpolated based on the new state and the fully worn state.

12. A method of controlling an electromechanical brake actuator (104) of a brake assembly comprising:

   responsive to receiving a request to apply a requested force to the brake assembly, identifying, by an electromechanical brake actuator controller, a worn state of a plurality of rotating discs of the brake assembly;
   identifying, by the electromechanical brake actuator controller, a ball screw position based on the worn state and a stiffness curve for the electromechanical brake actuator (104) that represents force versus ball screw position for the worn state; and

responsive to identifying the ball screw position for the requested force from the stiffness curve for the electromechanical brake actuator (104), commanding, by the electromechanical brake actuator controller, the electromechanical brake actuator (104) to extend a ball screw (106) to the ball screw position to apply the requested force to a pressure plate (110) towards an end plate (111) thereby forcing the plurality of rotating discs together in an axial direction in order to reduce a rotational speed of the plurality of rotating discs.

13. The method of claim 12, wherein the ball screw position is determined using a position sensor and wherein the position sensor is at least one of a resolver, tachometer, or Hall sensor; and/or

wherein, responsive to a load cell sensor being faulty, the electromechanical brake actuator controller is configured to command an extension of the ball screw (106) to the ball screw position to apply the requested force to the pressure plate (110) towards the end plate (111) and wherein the ball screw (106) is extended by the electromechanical brake actuator (104) to the ball screw position based on the worn state of the plurality of rotating discs and the stiffness curve for the electromechanical brake actuator (104) that represents force versus ball screw position for the worn state.

14. The method of claim 12 or 13, wherein the stiffness curve for the electromechanical brake actuator (104) is a plurality of stiffness curves for the electromechanical brake actuator (104) for a plurality of worn states and wherein the ball screw position for the requested force is determined using a selected one of the plurality of stiffness curves for the electromechanical brake actuator (104) based on the worn state of the plurality of rotating discs; or

wherein the stiffness curve for the electromechanical brake actuator (104) is a plurality of stiffness curves for the electromechanical brake actuator (104) for a plurality of worn states and wherein the ball screw position for the requested force is determined using two stiffness curves for the electromechanical brake actuator (104) of the plurality of stiffness curves for the electromechanical brake actuator (104) and interpolating the ball screw position from the two stiffness curves for the electromechanical brake actuator (104) based on the worn state of the plurality of rotating discs.

15. The method of claim 14,

wherein the plurality of stiffness curves for the electromechanical brake actuator (104) for the plurality of worn states includes a stiffness curve for the electromechanical brake actuator (104) for new state that is identified by an initial determined distance between a fully retracted ball screw position and initial contact of the pressure plate (110) to the plurality of rotating discs and includes a stiffness curve for the electromechanical brake actuator (104) for a fully worn state is determined based on the initial determined distance and a thickness of the plurality of rotating discs, and

wherein the plurality of stiffness curves for the electromechanical brake actuator (104) for the plurality of worn states includes at least a 25% worn state, a 50% worn state, and a 75% worn state interpolated based on the new state and the fully worn state.

FIG. 1A

FIG.1B

FIG.2

300

DETECT A FAULTY LOAD CELL FOR AN
ELECTROMECHANICAL BRAKE ACTUATOR (EBA) 302

IDENTIFY A WORN STATE OF THE BRAKE
ASSOCIATED WITH THE EBA 304

IDENTIFY A REQUIRED EXTENSION FOR THE BALL
SCREW ASSOCIATED WITH THE EBA THAT WILL
CORRESPOND TO A REQUESTED FORCE UTILIZING
ONE OR MORE OF THE VARIOUS STIFFNESS
CURVES IS ASSOCIATED WITH A WORN STATE 306

IS THE WORN
STATE SUBSTANTIALLY EQUIVALENT
TO ONE OF THE VARIOUS STIFFNESS
CURVES? 308

UTILIZE THE IDENTIFIED POSITION OF
THE BALL SCREW ASSOCIATED WITH
THE REQUESTED FORCE FROM THE
STIFFNESS CURVE TO SEND A
COMMAND THE EBA TO EXTEND THE
BALL SCREW TO THE IDENTIFIED BALL
SCREW POSITION TO APPLY THE
REQUESTED FORCE 310

INTERPOLATE LINEARLY A POSITION
FOR THE BALL SCREW ASSOCIATED
WITH THE REQUESTED FORCE FROM
TWO STIFFNESS CURVES AND SEND A
COMMAND THE EBA TO EXTEND THE
BALL SCREW TO THE INTERPOLATED
POSITION TO APPLY THE REQUESTED
FORCE 312

FIG.3

400

IDENTIFY A WORN STATE OF THE BRAKE
ASSOCIATED WITH EACH EBA ~ 402

IDENTIFY A REQUIRED EXTENSION FOR THE BALL
SCREW ASSOCIATED WITH EACH EBA THAT WILL
CORRESPOND TO A REQUESTED FORCE UTILIZING
ONE OR MORE OF THE VARIOUS STIFFNESS
CURVES IS ASSOCIATED WITH A RESPECTIVE
WORN STATE ~ 404

IS THE WORN
STATE SUBSTANTIALLY EQUIVALENT
TO ONE OF THE VARIOUS STIFFNESS
CURVES? ~ 406

UTILIZE THE IDENTIFIED POSITION OF
THE BALL SCREW ASSOCIATED WITH
THE REQUESTED FORCE FROM THE
STIFFNESS CURVE TO SEND A
COMMAND TO THE RESPECTIVE EBA
TO EXTEND THE BALL SCREW TO THE
IDENTIFIED BALL SCREW POSITION TO
APPLY THE REQUESTED FORCE ~ 408

INTERPOLATE LINEARLY A POSITION
FOR THE BALL SCREW ASSOCIATED
WITH THE REQUESTED FORCE FROM
TWO STIFFNESS CURVES AND SEND A
COMMAND THE RESPECTIVE EBA TO
EXTEND THE BALL SCREW TO THE
INTERPOLATED POSITION TO APPLY
THE REQUESTED FORCE ~ 410

FIG.4

Europäisches
Patentamt

European
Patent Office

Office européen
des brevets

# EUROPEAN SEARCH REPORT

Application Number

EP 24 20 5414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/023648 A1 (SINGH SAMEEP [US]) 25 January 2018 (2018-01-25) | 1-4, 8-10, 12-14 | INV. B60T13/74 |
| A | * paragraphs [0020] - [0026]; figures 1,2 * | 5-7,11, 15 | |
| A | DE 600 25 230 T2 (GOODRICH CORP [US]) 7 September 2006 (2006-09-07) * paragraphs [0023] - [0027]; figure 1 * | 1-15 | |
| A | US 2016/161352 A1 (SINGH SAMEEP [US] ET AL) 9 June 2016 (2016-06-09) * paragraphs [0020] - [0026]; figures 1,2 * | 1-15 | |

TECHNICAL FIELDS
SEARCHED       (IPC)

B60T
F16D

The present search report has been drawn up for all claims

| Place of search | Date of completion of the search | Examiner |
|---|---|---|
| Munich | 6 March 2025 | Raffaelli, Leonardo |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
........................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 20 5414

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2025

| Patent document cited in search report | | Publication date | Patent family member(s) | | Publication date |
|---|---|---|---|---|---|
| US 2018023648 | A1 | 25-01-2018 | EP | 3272601 A1 | 24-01-2018 |
| | | | US | 2018023648 A1 | 25-01-2018 |
| DE 60025230 | T2 | 07-09-2006 | AU | 1365301 A | 17-04-2001 |
| | | | DE | 60025230 T2 | 07-09-2006 |
| | | | EP | 1214531 A1 | 19-06-2002 |
| | | | US | 2006102436 A1 | 18-05-2006 |
| | | | WO | 0120188 A1 | 22-03-2001 |
| US 2016161352 | A1 | 09-06-2016 | EP | 3031682 A1 | 15-06-2016 |
| | | | US | 2016161352 A1 | 09-06-2016 |

EPO FORM P0459

For more details about this annex : see Official Journal of the European Patent Office, No. 12/82